# FASCICULE DE BREVET EUROPEEN

(11) **EP 1 586 968 B1**
(45) Date de publication et mention de la délivrance du brevet: **24.02.2010**
(21) Numéro de dépôt: 05290578.3
(22) Date de dépôt: 16.03.2005
(51) Int. Cl.: G05D 1/00

(54) **Sytème de pilotage longitudinal d'un aéronef roulant sur le sol**
System zur längsgerichteten Führung eines am Boden rollenden Flugzeuges
System for longitudinally piloting an aircraft rolling on the ground

(30) Priorité: 16.04.2004 FR 0403972
(43) Date de publication de la demande: 19.10.2005
(73) Titulaire: AIRBUS OPERATIONS (SAS), 31060 Toulouse (FR)
(72) Inventeur: Villaume, Fabrice, 31000 Toulouse (FR); Duprez, Jean, 31700 Blagnac (FR)
(74) Mandataire: Hauer, Bernard

(56) Documents cités:
- FR-A- 2 770 824
- US-A1- 2003 125 848

## Description

La présente invention concerne un système de pilotage longitudinal d'un aéronef, en particulier d'un avion de transport civil, roulant sur le sol, notamment sur une piste d'atterrissage ou une voie de roulement d'un aéroport.

De façon usuelle, pour contrôler la vitesse de roulage au sol d'un aéronef, le pilote dispose à la fois de manettes de gaz (qui sont destinées à commander directement la poussée engendrée par les moteurs de l'aéronef) et de pédales de freins (qui sont destinées à commander directement la pression appliquée dans les freins de roues).

Le pilote de l'aéronef est donc en mesure d'agir directement sur le régime moteur et sur la pression de freinage. Ces deux types d'actionnement sont bien entendu distincts et doivent être commandés individuellement. Il en résulte une charge de pilotage importante pour pouvoir maintenir ou obtenir une vitesse de roulage désirée, ainsi qu'une utilisation non optimale des moteurs et des freins (usure prématurée, consommation, ...).

En effet, en plus d'engendrer une activité de pilotage significative lors des roulages, cette solution usuelle suppose une utilisation parfois excessive des actionneurs (relatifs aux moteurs et aux freins) pouvant induire une augmentation de l'usure ou un accroissement inutile des températures des freins (avec un impact direct sur le temps d'escale dans certaines conditions).

Par ailleurs, par le document US 2003/125848 A1, on connaît un système pour contrôler le roulage d'un aéronef au sol. Ce système comporte :
- une pluralité de moteurs susceptibles d'engendrer une poussée de l'aéronef, chacun desdits moteurs étant contrôlé par un premier actionneur commandable associé, conformément à un ordre de commande reçu ;
- une pluralité de freins susceptibles de freiner l'aéronef lorsqu'il roule sur le sol, chacun desdits freins étant contrôlé par un second actionneur commandable associé, conformément à un ordre de commande reçu ;
- une unité de commande susceptible d'engendrer une consigne de pilotage ; et
- une unité centrale pour déterminer automatiquement, à partir de ladite consigne de pilotage, une pluralité d'ordres de commande individuels qui sont appliqués automatiquement respectivement auxdits premiers et seconds actionneurs.

La présente invention a pour objet de remédier aux inconvénients précités. Elle concerne un système de pilotage longitudinal d'un aéronef roulant sur le sol, qui permet de faciliter et d'améliorer le contrôle de la vitesse lors du roulage.

A cet effet, selon l'invention, ledit système du type comportant :
- une pluralité de moteurs susceptibles d'engendrer une poussée de l'aéronef, chacun desdits moteurs étant contrôlé par un premier actionneur commandable associé, conformément à un ordre de commande reçu ;
- une pluralité de freins susceptibles de freiner l'aéronef lorsqu'il roule sur le sol, chacun desdits freins étant contrôlé par un second actionneur commandable associé, conformément à un ordre de commande reçu ;
- une unité de commande susceptible d'engendrer une consigne de pilotage ; et
- une unité centrale pour déterminer automatiquement, à partir de ladite consigne de pilotage, une pluralité d'ordres de commande individuels qui sont appliqués automatiquement respectivement auxdits premiers et seconds actionneurs,

est remarquable en ce que ladite unité de commande engendre une consigne de pilotage qui concerne le comportement longitudinal de l'aéronef et qui est globale, en ce que ladite unité centrale est formée de manière à déterminer automatiquement une pluralité d'ordres de commande individuels qui sont tels qu'appliqués auxdits premiers et seconds actionneurs, ils permettent de satisfaire ladite consigne de pilotage globale concernant le comportement longitudinal de l'aéronef, ainsi qu'une priorité d'utilisation desdits actionneurs, et en ce que ladite unité centrale est formée de manière à mettre en oeuvre une priorité d'utilisation relative auxdits premiers et seconds actionneurs, qui présente les caractéristiques suivantes :
- lorsque lesdits premiers actionneurs relatifs à un mode de poussée sont activés, ladite unité centrale détermine une consigne pour les moteurs, elle compare cette consigne pour les moteurs à une valeur prédéterminée, et :
   ■ tant que ladite consigne pour les moteurs est supérieure à ladite valeur prédéterminée, elle garde ledit mode de poussée ; et
   ■ lorsque ladite consigne pour les moteurs devient inférieure ou égale à ladite valeur prédéterminée, elle passe à un mode de freinage, pour lequel lesdits seconds actionneurs sont activés et lesdits premiers actionneurs sont passivés ; et
- lorsque lesdits seconds actionneurs relatifs audit mode de freinage sont activés, ladite unité centrale détermine une consigne pour les freins, et :
   ■ tant que ladite consigne pour les freins est positive, elle garde ledit mode de freinage ; et
   ■ lorsque ladite consigne pour les freins devient nulle ou négative, elle passe audit mode de poussée, pour lequel lesdits premiers actionneurs sont activés et lesdits seconds actionneurs sont passivés.

Ledit système de pilotage conforme à l'invention permet ainsi de contrôler par objectif la vitesse de l'aéronef en agissant automatiquement de manière optimale sur les freins et les moteurs. Le pilote contrôle la consigne de pilotage (une vitesse ou une variation de vitesse) et n'a plus à agir directement sur les moteurs et les freins.

Par conséquent, le pilotage de l'aéronef est rendu plus stable et instinctif, ce qui permet de rendre le comportement de l'aéronef plus homogène et d'alléger la charge de travail de l'équipage.

On remarquera que le système de la présente invention peut commander aussi bien les freins des roues de l'aéronef que les freins aérodynamiques de celui-ci, tels que les aérofreins.

Par ailleurs, dans un premier mode de réalisation, ladite unité centrale comporte :
- des premiers moyens pour déterminer une action longitudinale globale, telle qu'un effort ou une variation d'effort, représentative de ladite consigne de pilotage ;
- des deuxièmes moyens pour répartir ladite action longitudinale globale en une pluralité d'actions individuelles relatives auxdits premiers et seconds actionneurs de manière à satisfaire ledit objectif d'utilisation ; et
- des troisièmes moyens pour déterminer, à partir desdites actions individuelles, des ordres de commande individuels correspondants, à appliquer auxdits premiers et seconds actionneurs.

En outre, dans un second mode de réalisation, ladite unité centrale comporte :
- des premiers moyens pour engendrer, à partir de ladite consigne de pilotage, des ordres de commande individuels à appliquer auxdits premiers et seconds actionneurs ; et
- des seconds moyens pour modifier lesdits ordres de commande individuels de manière à satisfaire ledit objectif d'utilisation, ainsi que ladite consigne de pilotage.

Par ailleurs, différents types d'utilisation dudit système de pilotage sont envisageables. Ainsi, avantageusement, ladite unité de commande peut comporter :
- un organe de commande spécifique susceptible d'être actionné par un pilote de l'aéronef, ladite consigne de pilotage dépendant de l'actionnement dudit organe de commande ; et/ou
- un moyen de sélection permettant à un pilote de l'aéronef de sélectionner une valeur de consigne, ladite consigne de pilotage dépendant de la valeur de consigne ainsi sélectionnée ; et/ou
- un ensemble comprenant :
   ■ un moyen pour déterminer la vitesse courante de l'aéronef ; et
   ■ un moyen pour calculer une valeur de consigne permettant à l'aéronef de maintenir ladite vitesse courante, ladite consigne de pilotage dépendant de la valeur de consigne ainsi calculée.

En outre, dans un mode de réalisation, ladite unité de commande engendre, comme consigne de pilotage, une consigne d'accélération, tandis que, dans une variante de réalisation, elle engendre, comme consigne de pilotage, une consigne de vitesse.

Les figures du dessin annexé feront bien comprendre comment l'invention peut être réalisée. Sur ces figures, des références identiques désignent des éléments semblables.
La figure 1 est le schéma synoptique d'un système de pilotage conforme à l'invention.
Les figures 2 et 3 illustrent schématiquement deux modes de réalisation différents d'une unité centrale d'un système de pilotage conforme à l'invention.

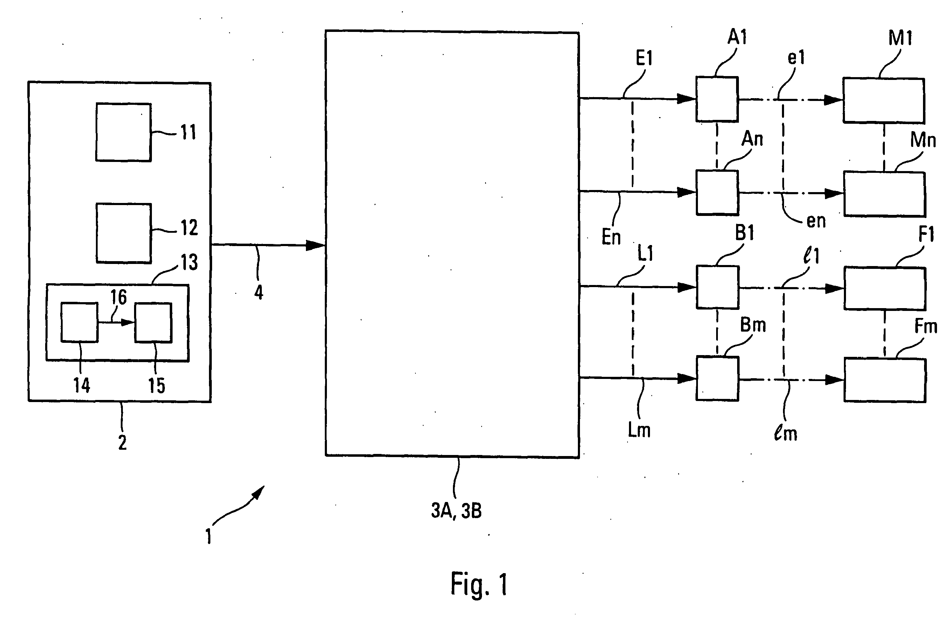

Le système 1 conforme à l'invention et représenté schématiquement sur la figure 1 est un système de pilotage longitudinal d'un aéronef, en particulier d'un avion de transport civil, non représenté et roulant sur le sol, notamment sur une plate-forme aéroportuaire, qui permet de faciliter et d'améliorer le contrôle de la vitesse dudit aéronef lors du roulage sur le sol.

Pour contrôler la vitesse de l'aéronef, ledit système de pilotage 1 comporte, de façon usuelle :
- une pluralité de moteurs M1 à Mn, n étant un entier supérieur ou égal à 2, susceptibles d'engendrer une poussée de l'aéronef, chacun desdits moteurs M1 à Mn étant contrôlé de façon usuelle par un premier actionneur commandable intégré A1 à An (comme illustré par des liaisons e1 à en en traits mixtes sur la figure 1), conformément à un ordre de commande reçu ; et
- une pluralité de freins F1 à Fm, m étant un entier supérieur à 2, susceptibles de freiner l'aéronef lorsqu'il roule sur le sol, chacun desdits freins F1 à Fm étant contrôlé de façon usuelle par un second actionneur commandable intégré B1 à Bm (comme illustré par des liaisons f1 à fm en traits mixtes), conformément à un ordre de commande reçu.

Selon l'invention, ledit système de pilotage 1 comporte de plus :
- une unité de commande 2 susceptible d'engendrer une consigne de pilotage précisée ci-dessous, qui est relative au comportement longitudinal de l'aéronef et qui est globale ; et
- une unité centrale 3A, 3B qui est reliée par une liaison 4 à ladite unité de commande 2, pour déterminer automatiquement, à partir de ladite consigne de pilotage, une pluralité d'ordres de commande individuels qui sont appliqués automatiquement auxdits actionneurs A1 à An et B1 à Bm respectivement par l'intermédiaire de liaisons E1 à En et L1 à Lm et qui sont tels qu'appliqués auxdits actionneurs A1 à An et B1 à Bm, ils permettent de satisfaire ladite consigne de pilotage, ainsi qu'un objectif d'utilisation précisé ci-dessous desdits actionneurs A1 à An et B1 à Bm.

Ledit système de pilotage 1 conforme à l'invention permet ainsi de contrôler par objectif la vitesse ou une variation de vitesse de l'aéronef, en agissant automatiquement de manière optimale sur les freins F1 à Fm et les moteurs M1 à Mn. Le pilote contrôle uniquement ladite consigne de pilotage (une vitesse ou une variation de vitesse), c'est-à-dire une consigne globale, et il n'a plus à agir directement sur les moteurs et les freins.

Par conséquent, le pilotage de l'aéronef est rendu plus stable et instinctif, ce qui permet de rendre le comportement de l'aéronef plus homogène et d'alléger la charge de travail de l'équipage.

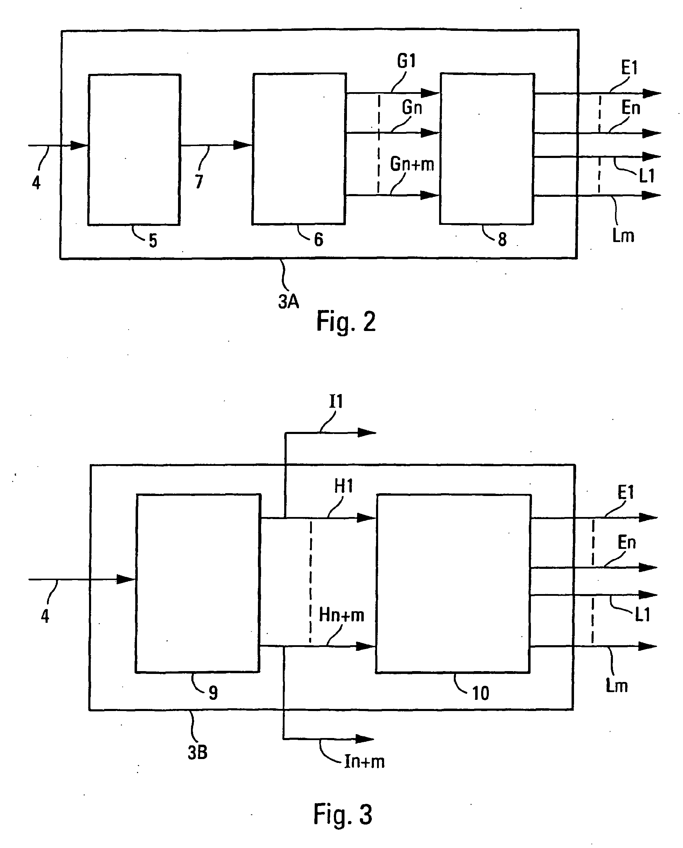

Par ailleurs, dans un premier mode de réalisation représenté sur la figure 2, ladite unité centrale 3A comporte :
- des moyens 5 qui sont reliés à la liaison 4, pour déterminer un effort (ou force) ou variation d'effort longitudinal global, représentatif de ladite consigne de pilotage et devant donc être réalisé par les moteurs M1 à Mn et les freins F1 à Fm ;
- des moyens 6 qui sont reliés par l'intermédiaire d'une liaison 7 auxdits moyens 5, pour répartir ledit effort ou ladite variation d'effort longitudinal global en une pluralité d'efforts ou de variations d'efforts individuels relatifs auxdits actionneurs A1 à An et B1 à Bm de manière à satisfaire ledit objectif d'utilisation, lesdits moyens 6 réalisant ainsi une supervision de la répartition ; et
- des moyens 8 pour déterminer, à partir desdits efforts ou variations d'efforts individuels reçus par l'intermédiaire de liaisons G1 à Gm + n, des ordres de commande individuels correspondants, à appliquer directement auxdits actionneurs A1 à An et B1 à Bm, par l'intermédiaire desdites liaisons E1 à En et L1 à Lm.

En outre, dans un second mode de réalisation représenté sur la figure 3, ladite unité centrale 3B comporte :
- des moyens 9 reliés à la liaison 4, pour engendrer, à partir de ladite consigne de pilotage, des ordres de commande individuels à appliquer auxdits actionneurs A1 à An et B1 à Bm par l'intermédiaire de liaisons I1 à Im+n (reliées par exemple aux liaisons E1 à En et L1 à Lm) ; et
- des moyens 10 pour modifier lesdits ordres de commande individuels reçus par l'intermédiaire de liaisons H1 à Hm+n de manière à satisfaire ledit objectif d'utilisation, ainsi que ladite consigne de pilotage. Les ordres de commande individuels ainsi modifiés sont transmis directement aux actionneurs A1 à An et B1 à Bm par l'intermédiaire desdites liaisons E1 à En et L1 à Lm.

Dans le cadre de la présente invention, différents types d'utilisation dudit système de pilotage 1 sont envisageables. Ainsi, ladite unité de commande 2 peut comporter notamment, comme représenté schématiquement sur la figure 1 :
- un organe de commande spécifique 11 actionnable, par exemple un manche, susceptible d'être actionné par un pilote de l'aéronef, la consigne de pilotage transmise par la liaison 4 dépendant alors de l'actionnement dudit organe de commande 11 ;
- un moyen de sélection 12 usuel, par exemple un bouton rotatif, permettant à un pilote de l'aéronef de sélectionner une valeur de consigne, notamment une vitesse de consigne, la consigne de pilotage transmise par la liaison 4 dépendant alors de la valeur de consigne ainsi sélectionnée ;
- un ensemble 13 comprenant :
   ■ un moyen 14 pour déterminer de façon usuelle la vitesse courante de l'aéronef ; et
   ■ un moyen 15 relié par une liaison 16 au moyen 14, pour calculer une valeur de consigne permettant à l'aéronef de maintenir ladite vitesse courante, ladite consigne de pilotage dépendant alors de la valeur de consigne ainsi calculée.

En outre, dans un premier mode de réalisation, ladite unité de commande 2 engendre, comme consigne de pilotage, une consigne d'accélération, tandis que, dans un second mode de réalisation, elle engendre, comme consigne de pilotage, une consigne de vitesse.

On notera que ces deux derniers modes de réalisation se basent sur une même loi de commande (une loi de pilotage en accélération). En effet, la loi de pilotage en vitesse correspond à la succession de deux sous-ensembles :
- un premier asservissement ayant pour but de déduire une consigne d'accélération à partir de la consigne en vitesse (et de la mesure de cette dernière) ; et
- la loi de pilotage en accélération engendrant les consignes à envoyer aux actionneurs.

Différents types d'objectif d'utilisation (ou d'ordre ou priorité d'utilisation) des différents actionneurs A1 à An et B1 à Bm peuvent être mis en oeuvre dans le cadre de la présente invention.

Toutefois, dans un mode de réalisation préféré, ladite unité centrale 3A, 3B met en oeuvre un objectif d'utilisation relatif auxdits actionneurs A1 à An et B1 à Bm, présentant les caractéristiques suivantes :
- lorsque lesdits actionneurs A1 à An relatifs à un mode de poussée (moteurs M1 à Mn en action) sont activés (c'est-à-dire sont commandés et reçoivent donc des ordres de commande individuels), ladite unité centrale 3A, 3B détermine une consigne N1 relative à la vitesse de rotation du module basse pression des moteurs M1 à Mn, elle compare cette consigne N1 à un régime au ralenti prédéterminé, et :
   ■ tant que ladite consigne N1 est supérieure audit régime au ralenti, elle garde ledit mode de poussée ; et
   ■ lorsque ladite consigne N1 devient inférieure ou égale audit régime au ralenti, elle passe à un mode de freinage, pour lequel lesdits actionneurs B1 à Bm sont activés (c'est-à-dire sont commandés et reçoivent donc des ordres de commande individuels) et lesdits actionneurs A1 à An sont passivés (c'est-à-dire sont commandés et reçoivent des ordres de commande correspondant à une action neutre) ;
- lorsque lesdits actionneurs B1 à Bm relatifs audit mode de freinage (freins F1 à Fm en action) sont activés, ladite unité centrale 3A, 3B détermine une consigne en pression, et :
   ■ tant que ladite consigne en pression est positive, elle garde ledit mode de freinage ; et
   ■ lorsque ladite consigne en pression devient nulle ou négative, elle passe audit mode de poussée, pour lequel lesdits actionneurs A1 à An sont activés et lesdits actionneurs B1 à Bm sont passivés.

Dans le cadre de la présente invention :
- la consigne pour les moteurs peut également être une autre consigne que ladite consigne N1, par exemple une consigne EPR des rapports de pressions moteurs (EPR : "Engine Pressure Ratio" en anglais) ; et
- la consigne pour les freins peut également être une autre consigne que ladite consigne en pression, par exemple une consigne de couple de freinage.

## Revendications

1. Système de pilotage longitudinal d'un aéronef roulant sur le sol, pour contrôler la vitesse de roulage de l'aéronef, ledit système comportant :
- une pluralité de moteurs (M1, Mn) susceptibles d'engendrer une poussée de l'aéronef, chacun desdits moteurs (M1, Mn) étant contrôlé par un premier actionneur commandable (A1, An) associé, conformément à un ordre de commande reçu ;
- une pluralité de freins (F1, Fm) susceptibles de freiner l'aéronef lorsqu'il roule sur le sol, chacun desdits freins (F1, Fm) étant contrôlé par un second actionneur commandable (B1, Bm) associé, conformément à un ordre de commande reçu ;
- une unité de commande (2) susceptible d'engendrer une consigne de pilotage ; et
- une unité centrale (3A, 3B) pour déterminer automatiquement, à partir de ladite consigne de pilotage, une pluralité d'ordres de commande individuels qui sont appliqués automatiquement respectivement auxdits premiers et seconds actionneurs (A1, An, B1, Bm),
**caractérisé en ce que** ladite unité de commande (2) engendre une consigne de pilotage qui concerne le comportement longitudinal de l'aéronef et qui est globale, **en ce que** ladite unité centrale (3A, 3B) est formée de manière à déterminer automatiquement une pluralité d'ordres de commande individuels qui sont tels qu'appliqués auxdits premiers et seconds actionneurs (A 1, An, B1, Bm), ils permettent de satisfaire ladite consigne de pilotage globale concernant le comportement longitudinal de l'aéronef, ainsi qu'une priorité d'utilisation desdits actionneurs (A1, An, B1, Bm), et **en ce que** ladite unité centrale (3A, 3B) est formée de manière à mettre en oeuvre une priorité d'utilisation relative auxdits premiers et seconds actionneurs (A1, An, B1, Bm), qui présente les caractéristiques suivantes :
- lorsque lesdits premiers actionneurs (A1, An) relatifs à un mode de poussée sont activés, ladite unité centrale (3A, 3B) détermine une consigne pour les moteurs, elle compare cette consigne pour les moteurs à une valeur prédéterminée, et :
■ tant que ladite consigne pour les moteurs est supérieure à ladite valeur prédéterminée, elle garde ledit mode de poussée ; et
■ lorsque ladite consigne pour les moteurs devient inférieure ou égale à ladite valeur prédéterminée, elle passe à un mode de freinage, pour lequel lesdits seconds actionneurs (B1, Bm) sont activés et lesdits premiers actionneurs (A1, An) sont passivés ; et
- lorsque lesdits seconds actionneurs (B1, Bm) relatifs audit mode de freinage sont activés, ladite unité centrale (3A, 3B) détermine une consigne pour les freins, et :
■ tant que ladite consigne pour les freins est positive, elle garde ledit mode de freinage ; et
■ lorsque ladite consigne pour les freins devient nulle ou négative, elle passe audit mode de poussée, pour lequel lesdits premiers actionneurs (A1, An) sont activés et lesdits seconds actionneurs (B1, Bm) sont passivés.

2. Système selon la revendication 1,
**caractérisé en ce que** ladite unité centrale (3A) comporte :
- des premiers moyens (5) pour déterminer une action longitudinale globale représentative de ladite consigne de pilotage ;
- des deuxièmes moyens (6) pour répartir ladite action longitudinale globale en une pluralité d'actions individuelles relatives auxdits premiers et seconds actionneurs (A1, An, B1, Bm) de manière à satisfaire ladite priorité d'utilisation ; et
- des troisièmes moyens (8) pour déterminer, à partir desdites actions individuelles, des ordres de commande individuels correspondants, à appliquer auxdits premiers et seconds actionneurs (A1, An, B1, Bm).

3. Système selon la revendication 1,
**caractérisé en ce que** ladite unité centrale (3B) comporte :
- des premiers moyens (9) pour engendrer, à partir de ladite consigne de pilotage, des ordres de commande individuels à appliquer auxdits premiers et seconds actionneurs (A1, An, B1, Bm) ; et
- des seconds moyens (10) pour modifier lesdits ordres de commande individuels de manière à satisfaire ladite priorité d'utilisation, ainsi que ladite consigne de pilotage.

4. Système selon l'une quelconque des revendications précédentes,
**caractérisé en ce que** ladite unité de commande (2) comporte un organe de commande spécifique (11) susceptible d'être actionné par un pilote de l'aéronef, ladite consigne de pilotage dépendant de l'actionnement dudit organe de commande (11).

5. Système selon l'une quelconque des revendications précédentes,
**caractérisé en ce que** ladite unité de commande (2) comporte un moyen de sélection (12) permettant à un pilote de l'aéronef de sélectionner une valeur de consigne, ladite consigne de pilotage dépendant de la valeur de consigne ainsi sélectionnée.

6. Système selon l'une quelconque des revendications précédentes,
**caractérisé en ce que** ladite unité de commande (2) comporte :
- un moyen (14) pour déterminer la vitesse courante de l'aéronef ; et
- un moyen (15) pour calculer une valeur de consigne permettant à l'aéronef de maintenir ladite vitesse courante, ladite consigne de pilotage dépendant de la valeur de consigne ainsi calculée.

7. Système selon l'une quelconque des revendications 1 à 6, **caractérisé en ce que** ladite unité de commande (2) engendre, comme consigne de pilotage, une consigne d'accélération.

8. Système selon l'une quelconque des revendications 1 à 6, **caractérisé en ce que** ladite unité de commande (2) engendre, comme consigne de pilotage, une consigne de vitesse.

## Claims

1. Longitudinal piloting system for a taxiing aircraft for controlling the speed of the taxiing aircraft, said system including:
- a plurality of engines (M1, Mn) designed to generate a thrust of the aircraft, each of said engines (M1, Mn) being controlled by a first associated controllable actuator (A1, An), in accordance with a received control command;
- a plurality of brakes (F1, Fm) designed to reduce the speed of the aircraft when it is taxiing, each of said brakes (F1, Fm) being controlled by a second associated controllable actuator (B1, Bm), in accordance with a received control command,
- a control unit (2) designed to generate a piloting setpoint; and
- a central processing unit (3A), 3B) for automatically determining, from said piloting setpoint, a plurality of individual control commands which are automatically applied respectively to said first and second actuators (A1, An, B1, Bm),
**characterized in that** said control unit (2) generates a piloting setpoint which relates to the longitudinal behavior of the aircraft and which is global,**in that** said central processing unit (3A, 3B) is formed in order to determine automatically a plurality of individual control commands which, as applied to said first and second actuators (A1, An, B1, Bm), satisfy said piloting setpoint, as well as an usage priority of said actuators (A1, An, B1, Bm), and **in that** said central processing unit (3A, 3B) is formed such as to implement an usage priority relating to said first and second actuators (A1, An, B1, Bm), which presents the following characteristics:
- when said first actuators (A1, An) relating to a thrust mode are activated, said central processing unit (3A, 3B) determines a setpoint for the engines (M1, Mn), it compares this setpoint for the engines with predetermined value, and:
• as long as said setpoint for the engines is greater than said predetermined value, it retains said thrust mode; and
• when said setpoint for the engines becomes less than or equal to said predetermined value, it switches to a braking mode, for which said second actuators (B1, Bm) are activated and said first actuators (A1, An) are disabled; and
- when said second actuators (B1, Bm) relating to said braking mode are activated, said central processing unit (3A, 3B) determines a setpoint for the brakes, and:
• as long as said setpoint for the brakes is positive, it retains said braking mode; and
• when said setpoint for the brakes becomes zero or negative, it switches to said thrust mode, for which said first actuators (A1, An) are activated and said second actuators (B1, Bm) are disabled.

2. The system as claimed in claim 1, **characterized in that** said central processing unit (3A) includes:
- first means (5) for determining an overall longitudinal action representative of said piloting setpoint;
- second means (6) for distributing said overall longitudinal action between a plurality of individual actions relating to said first and second actuators (A1, An, B1, Bm) so as to satisfy said usage objective; and
- third means (8) for determining, from said individual actions, corresponding individual control commands, to be applied to said first and second actuators (A1, An, B1, Bm).

3. The system as claimed in claim 1,
**characterized** said central processing unit (3B) includes:
- first means (9) for generating, from said piloting setpoint, individual control commands to be applied to said first and second actuators (A1, An, B1, Bm); and
- second means (10) for modifying said individual control commands so as to satisfy said usage objective, and said piloting setpoint.

4. The system as claimed in any one of the preceding claims,
**characterized in that** said control unit (2) includes a specific control device (11) designed to be actuated by a pilot of the aircraft, said piloting setpoint depending on the actuation of said control device (11).

5. The system as claimed in any one of the preceding claims,
**characterized in that** said control unit (2) includes a selection means (12) enabling a pilot of the aircraft to select a setpoint value, said piloting setpoint depending on the duly selected setpoint value.

6. The system as claimed in any one of the preceding claims ,
**characterized in that** said control unit (2) includes:
- a means (14) for determining the current speed of the aircraft; and
- a means (15) for computing a setpoint value enabling the aircraft to maintain said current speed, said piloting setpoint depending on the duly computed setpoint value.

7. The system as claimed in any one of claims 1 to 6, **characterized in that** said control unit (2) generates, as piloting setpoint, an acceleration setpoint.

8. The system as claimed in any one of claims 1 to 6, **characterized in that** said control unit (2) generates, as piloting setpoint, a speed setpoint.

## Patentansprüche

1. System zum längsgerichteten Lenken eines am Boden rollenden Luftfahrzeugs, um die Rollgeschwindigkeit des Luftfahrzeugs zu steuern, wobei das System folgendes umfasst:
- eine Vielzahl von Motoren (M1, Mn), die in der Lage sind, einen Schub des Luftfahrzeugs zu erzeugen, wobei jeder der Motoren (M1, Mn) von einem ersten dazugehörigen regelbaren Stellglied (A1, An) gemäß einem empfangenen Regelbefehl gesteuert wird;
- eine Vielzahl von Bremsen (F1, Fm), die in der Lage sind, das Luftfahrzeug abzubremsen, wenn es am Boden rollt, wobei jede der Bremsen (F1, Fm) von einem zweiten dazugehörigen regelbaren Stellglied (B1, Bm) gemäß einem empfangenen Regelbefehl gesteuert wird;
- eine Regeleinheit (2), die in der Lage ist, eine Lenkanweisung zu erzeugen; und
- eine Zentraleinheit (3A, 3B), um von der Lenkanweisung ausgehend automatisch eine Vielzahl von individuellen Regelbefehlen zu bestimmen, die automatisch jeweils auf die ersten und zweiten Stellglieder (A1, An, B1, Bm) angewendet werden,
**dadurch gekennzeichnet, dass** die Regeleinheit (2) eine Lenkanweisung erzeugt, die das längsgerichtete Verhalten des Luftfahrzeugs betrifft und die global ist, dass die Zentraleinheit (3A, 3B) gebildet ist, um automatisch eine Vielzahl von individuellen Regelbefehlen zu bestimmen, die derart ausgestaltet sind, dass sie es ermöglichen, wenn sie auf die ersten und zweiten Stellglieder (A1, An, B1, Bm) angewendet werden, die globale Lenkanweisung bezüglich des längsgerichteten Verhaltens des Luftfahrzeugs sowie eine Verwendungspriorität der Stellglieder (A1, An, B1, Bm) zu erfüllen, und dass die Zentraleinheit (3A, 3B) gebildet ist, um eine die ersten und zweiten Stellglieder (A1, An, B1, Bm) betreffende Verwendungspriorität umzusetzen, die folgende Kennzeichen aufweist:
- wenn die ersten einen Schubmodus betreffenden Stellglieder (A1, An) aktiviert werden, bestimmt die Zentraleinheit (3A, 3B) eine Anweisung für die Motoren, vergleicht diese Anweisung für die Motoren mit einem vorherbestimmten Wert und:
• solange die Anweisung für die Motoren größer ist als der vorherbestimmte Wert, behält sie den Schubmodus bei; und
• wenn die Anweisung für die Motoren kleiner oder gleich dem vorherbestimmten Wert wird, geht sie auf einen Bremsmodus über, für den die zweiten Stellglieder (B1, Bm) aktiviert und die ersten Stellglieder (A1, An) passiviert werden; und
- wenn die zweiten den Bremsmodus betreffenden Stellglieder (B1, Bm) aktiviert werden, bestimmt die Zentraleinheit (3A, 3B) eine Anweisung für die Bremsen und:
• solange die Anweisung für die Bremsen positiv ist, behält sie den Bremsmodus bei; und
• wenn die Anweisung für die Bremsen null oder negativ wird, geht sie auf den Schubmodus über, für den die ersten Stellglieder (A1, An) aktiviert und die zweiten Stellglieder (B1, Bm) passiviert werden.

2. System nach Anspruch 1,
**dadurch gekennzeichnet, dass** die Zentraleinheit (3A) folgendes umfasst:
- erste Mittel (5), um eine globale längsgerichtete Aktion zu bestimmen, welche die Lenkanweisung darstellt;
- zweite Mittel (6), um die globale längsgerichtete Aktion auf eine Vielzahl von individuellen Aktionen aufzuteilen, die sich auf die ersten und zweiten Stellglieder (A1, An, B1, Bm) beziehen, um die Verwendungspriorität zu erfüllen; und
- dritte Mittel (8), um ausgehend von den individuellen Aktionen entsprechende individuelle Regelbefehle zu bestimmen, die auf die ersten und zweiten Stellglieder (A1, An, B1, Bm) anzuwenden sind.

3. System nach Anspruch 1,
**dadurch gekennzeichnet, dass** die Zentraleinheit (3B) folgendes umfasst:
- erste Mittel (9), um ausgehend von der Lenkanweisung individuelle Regelbefehle zu erzeugen, die auf die ersten und zweiten Stellglieder (A1, An, B1, Bm) anzuwenden sind; und
- zweite Mittel (10), um die individuellen Regelbefehle zu ändern, um die Verwendungspriorität sowie die Lenkanweisung zu erfüllen.

4. System nach einem der vorhergehenden Ansprüche,
**dadurch gekennzeichnet, dass** die Regeleinheit (2) ein spezifisches Regelorgan (11) umfasst, das in der Lage ist, von einem Piloten des Luftfahrzeugs betätigt zu werden, wobei die Lenkanweisung von der Betätigung des Regelorgans (11) abhängig ist.

5. System nach einem der vorhergehenden Ansprüche,
**dadurch gekennzeichnet, dass** die Regeleinheit (2) ein Auswahlmittel (12) umfasst, das es einem Piloten des Luftfahrzeugs ermöglicht, einen Anweisungswert auszuwählen, wobei die Lenkanweisung von dem derart ausgewählten Anweisungswert abhängig ist.

6. System nach einem der vorhergehenden Ansprüche,
**dadurch gekennzeichnet, dass** die Regeleinheit (2) folgendes umfasst:
- ein Mittel (14), um die laufende Geschwindigkeit des Luftfahrzeugs zu bestimmen; und
- ein Mittel (15), um einen Anweisungswert zu berechnen, der es dem Luftfahrzeug ermöglicht, die laufende Geschwindigkeit zu halten, wobei die Lenkanweisung von dem somit berechneten Anweisungswert abhängig ist.

7. System nach einem der Ansprüche 1 bis 6,
**dadurch gekennzeichnet, dass** die Regeleinheit (2) als Lenkanweisung eine Beschleunigungsanweisung erzeugt.

8. System nach einem der Ansprüche 1 bis 6,
**dadurch gekennzeichnet, dass** die Regeleinheit (2) als Lenkanweisung eine Geschwindigkeitsanweisung erzeugt.
